# EUROPÄISCHE PATENTSCHRIFT

(11) **EP 2 653 791 B1**
(45) Veröffentlichungstag und Bekanntmachung des Hinweises auf die Patenterteilung: **15.04.2015**
(21) Anmeldenummer: 13164071.6
(22) Anmeldetag: 17.04.2013
(51) Int. Cl.: F24D 3/14, B65H 35/00

(54) **Vorrichtung zum Befestigen von Rohren**
Device for fixing tubes
Dispositif de fixation de tubes

(30) Priorität: 17.04.2012 DE 102012103325
(43) Veröffentlichungstag der Anmeldung: 23.10.2013
(73) Patentinhaber: Schröder, Ulrich, 33415 Verl (DE); Henkenjohann, Walter, 33415 Verl (DE)
(72) Erfinder: Schröder, Ulrich, 33415 Verl (DE); Henkenjohann, Walter, 33415 Verl (DE)
(74) Vertreter: Ter Meer Steinmeister & Partner

(56) Entgegenhaltungen:
- EP-A1- 0 001 205
- EP-A1- 0 346 529
- EP-A2- 0 369 293
- DE-A1- 4 009 573
- DE-C1- 10 117 195
- DE-U1- 8 435 744
- DE-U1- 29 708 455
- DE-U1- 29 724 694
- DE-U1-202005 008 988
- DE-U1-202010 011 520
- FR-A1- 2 898 585

## Beschreibung

Die Erfindung betrifft Vorrichtung zum Befestigen von Rohren auf einer flächigen Unterlage mit Hilfe eines Haftbandes, in der Form eines Setzgerätes mit einem auf die Unterlage aufsetzbaren Gehäuse, in dem ein Stempel, der eine Ausnehmung für das Rohr aufweist, verschiebbar geführt ist.

Insbesondere befasst sich die Erfindung mit einer Vorrichtung zum Befestigen von Heizungsrohren einer Fußbodenheizung oder Wandheizung auf dem Fußboden bzw. an einer Wand.

Ein übliches Verfahren zum Befestigen von Rohren einer Fußbodenheizung auf einer Wärmedämmschicht eines Fußbodens besteht bisher darin, dass das Heizungsrohr punktuell mit Hilfe von Krampen befestigt wird, die in die Wärmedämmschicht einstechen und durch Widerhaken darin gehalten werden. Zum Eindrücken der Krampen kann ein handbetätigtes Tackergerät verwendet werden (DE 40 09 573 A1 und DE 20 2005 008 988 U1). Ein Nachteil dieser Befestigungsweise besteht jedoch darin, dass die Wärmedämmschicht durch die Krampen lokal beschädigt wird, so dass unerwünschte Kälte- und Trittschallbrücken entstehen.

Bei einem anderen bekannten Verfahren wird das Heizungsrohr schraubenförmig mit einem Klettband umwickelt, und auf der Unterlage wird vollflächig oder in Form einzelner Streifen eine Flauschbahn verlegt, in der sich das Klettband verhaken kann. Diese Befestigungsweise ermöglicht zwar ein einfaches Verlegen von Fußbodenheizungen, doch sind umfangreiche Vorbereitungsarbeiten erforderlich, um das Heizungsrohr mit dem Klettband zu umwickeln.

Aus DE 297 08 455 U1 ist eine Vorrichtung der eingangs genannten Art bekannt, bei der Streifen des Haftbandes mit Hilfe einer Spende- und Abtrenneinrichtung von einer Vorratsrolle abgezogen werden. Dieses Dokument zeigt den Oberbegriff von Anspruch 1.

Aufgabe der Erfindung ist es, eine alternatives Vorrichtung zur Befestigung von Rohren mit Hilfe eines Haftbandes anzugeben.

Diese Aufgabe wird erfindungsgemäß gelöst durch ein Magazin in der Form eines rechteckigen Kastens, der einen Stapel von vorgeschnittenen Streifen des Haftbandes aufnimmt und aus dem die vorgeschnittenen Streifen dem Stempel zuführbar sind.

Vorteilhafte Ausgestaltungen der Vorrichtung sind in den Unteransprüchen angegeben.

Im folgenden werden Ausführungsbeispiele anhand der Zeichnung näher erläutert.

Es zeigen:
- Fig. 1: eine Prinzipskizze zur Illustration eines Verfahrens zum Befestigen von Heizungsrohren;
- Fig. 2: einen Abschnitt eines nach dem Verfahren gemäß Fig. 1 befestigten Rohres in der Draufsicht:
- Fig. 3: eine Ansicht einer Vorrichtung zum Befestigen des Rohres;
- Fig. 4 und 5: Ansichten der Vorrichtung nach Fig. 3 in unterschiedlichen Betriebszuständen;
- Fig. 6 bis 8: Ansichten einer Vorrichtung gemäß einer Ausfiihrungsform der Erfindung in unterschiedlichen Betriebszuständen;
- Fig. 9: eine teilweise aufgeschnittene Ansicht der Vorrichtung nach Fig. 6;
- Fig. 10: eine teilweise aufgeschnittene Ansicht der Vorrichtung nach Fig. 6 in einem anderen Betriebszustand; und
- Fig. 11 und 12: vergrößerte Schnittdarstellungen von Teilen der Vorrichtung nach Fig. 9 und 10.

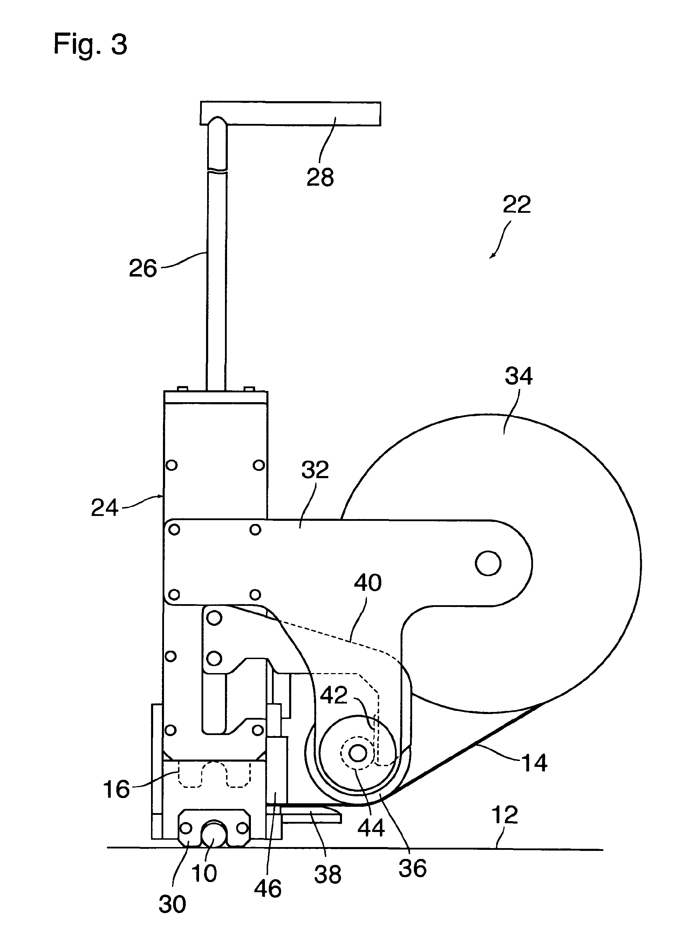

Die in den Figuren 3-5 gezeigten Ausführungsbeispiele und die entsprechenden Teile der Beschreibung fallen nicht unter den Schutzbereich der Patentansprüche.

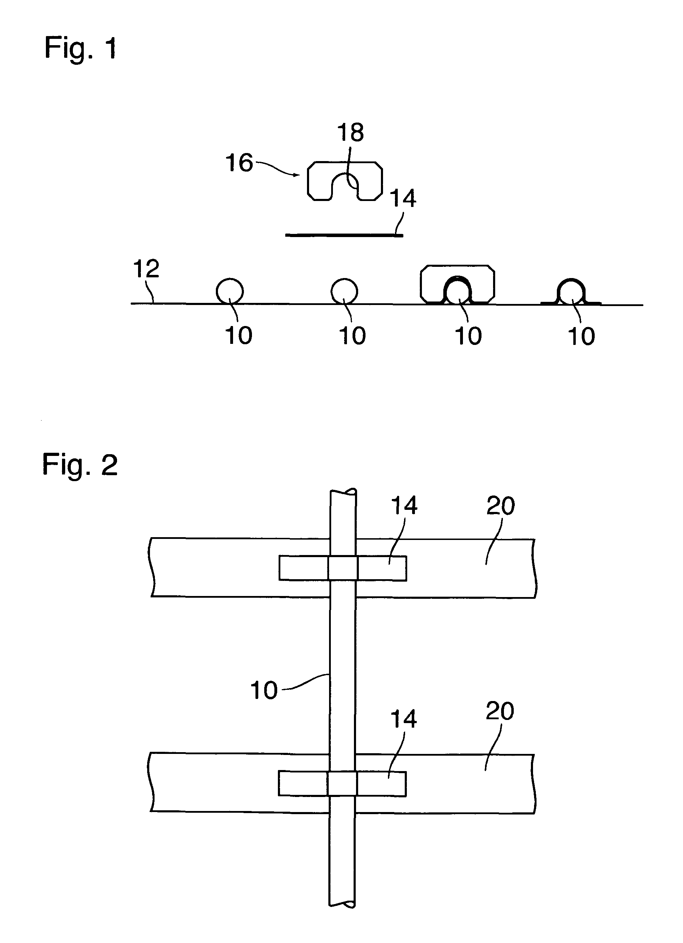

In Fig. 1 sind im Querschnitt vier parallele Rohre 10 dargestellt, die auf einer flächigen Unterlage 12 zu befestigen sind. Beispielsweise kann es sich bei den Rohren 10 um Heizungsrohre einer Fußbodenheizung handeln. Die Unterlage 12 ist dann ein Fußboden, auf dem die Heizungsrohre verlegt werden sollen. Zur Befestigung der Heizungsrohre auf dem Fußboden dient erfindungsgemäß ein Haftband 14. In Fig. 1 ist oberhalb des zweiten Rohres von links ein Abschnitt des Haftbandes 14 gezeigt, der sich quer zur Längsrichtung des Rohres 10 erstreckt und mit einem Stempel 16 beiderseits des Rohres 10 gegen die Unterlage 12 angedrückt werden soll, wie in Fig. 1 bei den beiden weiter rechts liegenden Rohren gezeigt ist. Der Stempel 16 weist eine Ausnehmung 18 auf, die den Querschnitt des Rohres 10 aufnimmt, während die beiderseits der Ausnehmung liegenden Teile des Stempels gegen die Unterlage 12 andrücken.

Bei dem Haftband 14 handelt es sich im gezeigten Beispiel um ein Klettband, das mit einer vollflächig oder in Form einzelner Streifen auf der Unterlage 12 verlegten Flauschbahn zusammenwirkt.

In Fig. 2 sind zwei parallele Streifen 20 der Flauschbahn gezeigt, die rechtwinklig zu dem zu verlegenden Rohr 10 verlaufen und auf der Unterlage 12 befestigt, beispielsweise aufgeklebt sind. Die Breite jedes Streifens 20 ist deutlich größer als die Breite des Haftbandes 14, so dass beim Anbringen des Haftbandes 14 kein genaues "Zielen" erforderlich ist.

In Fig. 3 ist ein Setzgerät 22 gezeigt, das dazu dient, das Haftband 14 in der in Fig. 1 gezeigten Weise auf der Unterlage 12 anzubringen, so dass das Rohr 10 damit fixiert wird.

Das Setzgerät 22 weist ein Gehäuse 24 auf, in dem der Stempel 16 vertikal verschiebbar geführt ist. Aus dem Gehäuse 24 tritt nach oben eine Antriebsstange 26 aus, die am oberen Ende einen Handgriff 38 aufweist, an dem sich das gesamte Setzgerät 22 mit der Hand halten und tragen lässt.

Am unteren Ende weist das Gehäuse 24 zwei Zentrierfüße 30 auf, die ähnlich geformt sind wie der Stempel 16 und die in Fig. 3 in der Richtung senkrecht zur Zeichenebene hintereinander liegen, so dass ihre Ausnehmungen einen Tunnel für das Rohr 10 bilden. Mit Hilfe der Zentrierfüße 30 lässt sich das Setzgerät 22 an der Stelle, an der das Rohr 10 einen Streifen 20 des Flauschbandes kreuzt, von Hand so auf das Rohr 10 aufsetzen, dass die Bewegungsbahn des Stempels 16 auf das Rohr zentriert ist.

An dem Gehäuse 24 sind mit Hilfe eines Halters 32 eine Vorratsrolle 34 für das Haftband 14 sowie eine Vorschubrolle 36 angebracht.

Mit Hilfe der Vorschubrolle 36 wird das von der Vorratsrolle 34 abgezogene Haftband 14 reibschlüssig über eine Bandführung 38 in einen Raum im Inneren des Gehäuses 24 transportiert, der unterhalb des Stempels 16 liegt.

Am Gehäuse 14 ist vertikalbeweglich ein Antriebsarm 40 für die Vorschubrolle 36 geführt. An einem vertikalen Schenkel des Antriebsarms 40 ist eine Zahnstange 42 angebracht, die mit einem auf der Welle der Vorschubrolle 36 sitzenden Zahnrad 44 kämmt. Das Zahnrad 44 ist mit der Vorschubrolle 36 über einen Freilauf gekoppelt, so dass die Vorschubrolle 36 nur bei einer Abwärtsbewegung des Antriebsarmes 40 gedreht wird, während bei einer Aufwärtsbewegung des Antriebsarmes 40 nur das Zahnrad 44 gedreht wird, ohne dass die Vorschubrolle 36 mitgenommen wird.

Auf der Seite des Gehäuses 24, die der Vorschubrolle 36 zugewandt ist, ist außerdem eine Kappvorrichtung 46 angebracht, mit der Abschnitte geeigneter Länge von dem durch die Vorschubrolle 36 vorgeschobenen Haftband 14 abgetrennt werden können.

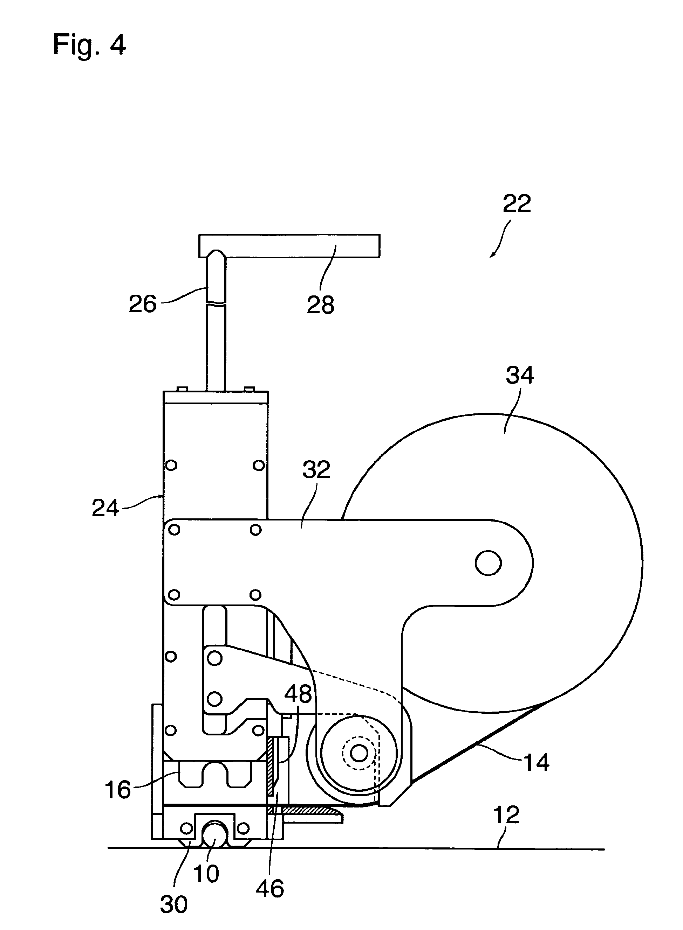

Wenn das Rohr 10 an einer bestimmten Stelle auf der Unterlage 12 befestigt werden soll, so wird das Setzgerät 22 in der in Fig. 3 gezeigten Weise auf das Rohr 10 aufgesetzt. Anschließend wird der Handgriff 28 nach unten gedrückt, so dass die Antriebsstange 26 in das Gehäuse 24 einfährt. Dadurch wird der Antriebsarm 40 nach unten bewegt, so dass die Vorschubrolle 36 in Drehung versetzt wird und das Haftband 14 vorschiebt, wie in Fig. 4 gezeigt ist.

Ein in dem Gehäuse 24 untergebrachter Schlagmechanismus, der als solcher von herkömmlichen Tackergeräten bekannt ist, sorgt dafür, dass bei einer Abwärtsbewegung der Antriebsstange 26 der Stempel 16 verzögert nach unten ausgefahren wird. Beispielsweise wird bei der Abwärtsbewegung der Antriebsstange 26 zunächst nur eine Schlagfeder gespannt, während ein im Gehäuse 24 geführter Schlitten, der am unteren Ende den Stempel 16 trägt, in seiner angehobenen Stellung verriegelt bleibt. Erst wenn die Antriebsstange 26 weiter nach unten bewegt wird, betätigt sie einen Auslöser, durch den die Verriegelung aufgehoben wird, so dass der Schlitten unter der Kraft der Schlagfeder nach unten schnellt.

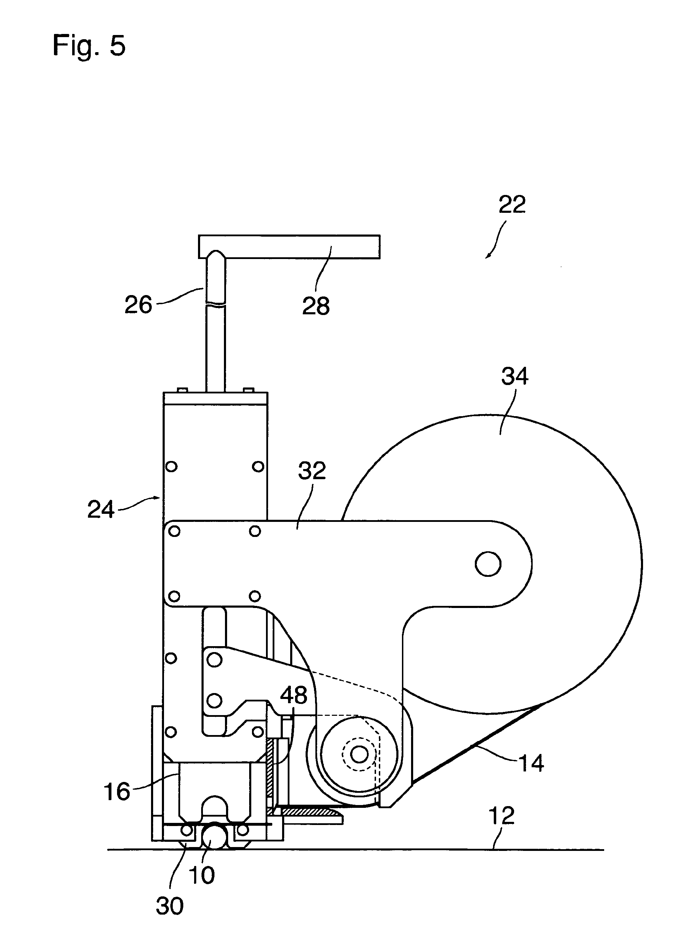

Durch einen ähnlichen Mechanismus wird auch ein Messer 48 des Kappmechanismus 46 betätigt. Zu einem geeigneten Zeitpunkt fährt deshalb auch das Messer 48 nach unten und bewegt sich an einer Schneidkante vorbei, so dass der vorgeschobene Abschnitt des Haftbandes 14 abgetrennt wird, wie in Fig. 5 zu erkennen ist. Bei der weiteren Abwärtsbewegung des Stempels 16 wird dann der abgetrennte Abschnitt des Haftbandes nach unten gedrückt, so dass er das Rohr 10 umschlingt, während dieses in die Ausnehmung 18 des Stempels eintritt. Schließlich werden die beiderseits des Rohres 10 überstehenden Enden des abgetrennten Abschnitt des Haftbandes gegen den Streifen 20 des Flauschbandes auf der Unterlage 12 gedrückt, so dass das Rohr sicher auf der Unterlage fixiert wird. Der erwähnte Schlagmechanismus sorgt dafür, dass das Andrücken des Haftbandes gegen die Unterlage stets mit der richtigen Geschwindigkeit und Kraft erfolgt.

In dem Gehäuse 24 ist außerdem eine nicht gezeigte Rückholfeder untergebracht, die, wenn die auf den Handgriff 28 ausgeübte Kraft nachlässt, die Antriebsstange 26 wieder nach oben aus dem Gehäuse 24 ausfährt, wobei auch der Schlitten mit dem Stempel 16 und das Messer 48 der Kappvorrichtung wieder in ihre Ausgangsstellung mitgenommen werden.

Wenn dann das Setzgerät 22 an anderer Stelle auf das Rohr 10 aufgesetzt wird, kann ein neuer Zyklus beginnen.

Der Stempel 16 und die Zentrierfüße 30 sind austauschbar und können gegen Stempel und Zentrierfüße ausgetauscht werden, deren Ausnehmungen an andere Rohrdurchmesser angepasst sind. Ebenso ist auch die Zahnstange 42 auswechselbar am Antriebsarm 40 befestigt. Die Länge dieser Zahnstange 42 bestimmt den Vorschubweg, um den das Haftband 14 in einem einzelnen Arbeitstakt vorgerückt wird. Durch Auswechseln der Zahnstange kann deshalb auch dieser Vorschubweg an den jeweiligen Rohrdurchmesser angepasst werden. Gegebenenfalls kann der Vorschubweg auch größer sein als die Breite des Gehäuses 24. Der vorgeschobene Abschnitt des Haftbandes wird sich dann innerhalb des Gehäuses 24 und unterhalb des in der angehobenen Stellung befindlichen Stempels 16 vorübergehend etwas nach oben durchwölben.

Das beschriebene Ausführungsbeispiel kann auf vielfältige Weise abgewandelt werden.

Beispielsweise kann das Haftband 14 auch durch ein Klebeband gebildet werden, sofern die Unterlage 12 ausreichend glatt ist oder streifenförmig oder vollflächig mit einer hinreichend glatten Folie bedeckt ist.

Ebenso ist es möglich, ein vorperforiertes Haftband zu verwenden, von dem sich die einzelnen Abschnitte leichter abtrennen lassen. Gegebenenfalls kann dann auf die Kappvorrichtung 46 verzichtet werden und es genügt, das Haftband mit Hilfe der Vorschubrolle 36 vorübergehend zu blockieren, während sich der Stempel 16 absenkt, so dass der vom Stempel erfasste Abschnitt des Haftbandes vom Rest des Haftbandes abgerissen wird.

In einer anderen Ausführungsform kann das Haftband 14 auch eine wechselnde Folge von Klettbandabschnitten und flexibleren Abschnitten aufweisen, die sich leichter durchtrennen lassen und sich auch besser an den Umfang des Rohres 10 anschmiegen. Die Klettbandabschnitte befinden sich dann nur in den Bereichen, die tatsächlich mit dem Flauschband auf der Unterlage 12 in Berührung kommen.

Schließlich ist es auch möglich, ein Haftband zu verwenden, bei dem einzelne Klettbandabschnitte ablösbar auf einem Trägerband angeordnet sind.

Das in Fig. 3 bis 5 gezeigte Setzgerät 22 ist insbesondere für das Verlegen von Rohren 10 einer Fußbodenheizung vorgesehen. Die Antriebsstange 26 ist dann so lang, dass der Handgriff 28 bequem im Stehen betätigt werden kann.

Bei einem Gerät, mit dem Rohre an einer vertikalen Wand angebracht werden, kann zum Betätigen des Stempels 16 ein Schwenkhebel oder dergleichen vorgesehen sein.

Ebenso sind auch Geräte denkbar, bei denen für den Antrieb des Stempels 16 und ggf. der Kappvorrichtung und des Bandvorschubs ein elektrischer Antrieb vorgesehen ist.

Für das Verlegen von Fußbodenheizungen kann das Setzgerät auch die Form eines Wagens haben, der in einer Stellung, in der er das zu befestigende Rohr 10 übergreift, in Längsrichtung des Rohres auf dem Fußboden verfahrbar ist.

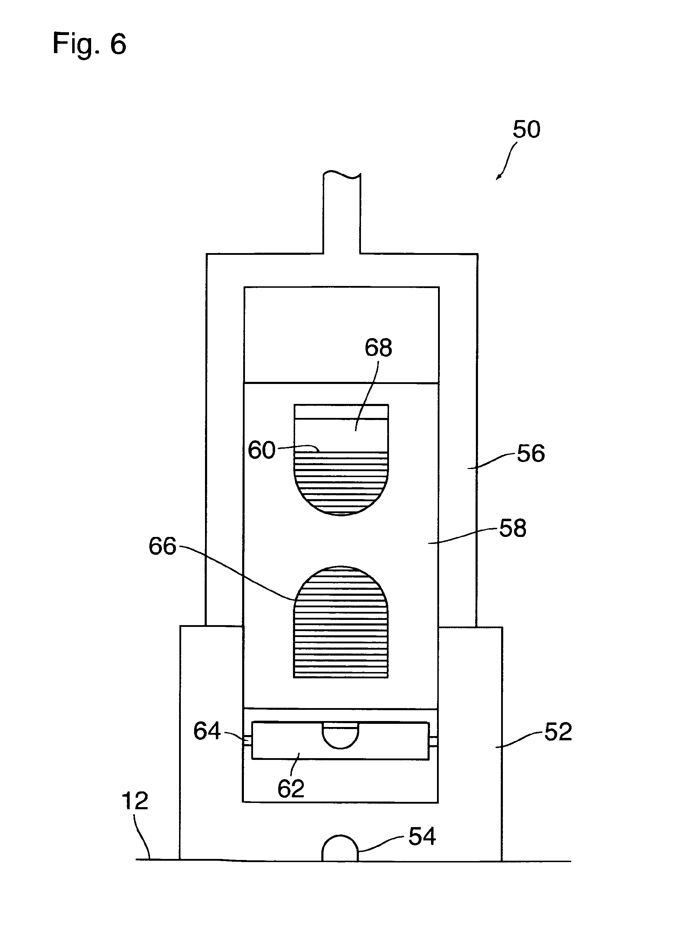

Eine andere Ausführungsform eines Setzgerätes soll nun anhand der Fig. 6 bis 12 erläutert werden.

Das in Fig. 6 gezeigte Setzgerät 50 weist einen Sockel 52 auf, der ähnlich wie die Zentrierfüße 30 in Fig. 3 auf die Unterlage aufsetzbar ist und einen Tunnel 54 zur Aufnahme des zu verlegenden Rohres aufweist. Beiderseits des Tunnels 54 bildet der Sockel zwei aufragende Arme, in denen ein gabelförmiger Schlitten 56 geführt ist, der an seinem oberen Ende einen nicht gezeigten Handgriff aufweist. In der von dem gabelförmigen Schlitten 56 umgriffenen Zone ist auf dem Sockel 52 ein Magazin 58 in der Form eines rechteckigen Kastens befestigt, der einen Stapel von vorgeschnittenen Streifen 60 des Haftbandes (Klettband) aufnimmt. Unterhalb des unteren Endes des Magazins 58 ist ein Stempel 62 vertikalbeweglich zwischen den aufragenden Armen des Sockels 52 geführt. Mit Hilfe des Schlittens 56 lässt sich der Stempel 62 in vertikaler Richtung bewegen und zugleich mit Hilfe eines Wendemechanismus, wie er beispielsweise von Datumsstemplern bekannt ist, um 180° um eine Achse 64 drehen. Bei Datumsstemplern dient dieser Mechanismus dazu, die Stempelfläche des Stempels in der oberen Endlage so auszurichten, dass sie nach oben weist und gegen ein Stempelkissen angedrückt wird, während sie, wenn der Stempel bei einem Stempelvorgang nach unten abgesenkt wird, in eine Lage gedreht wird, in der sie nach unten auf das zu stempelnde Schriftstück weist. Bei dem hier beschriebenen Setzgerät 50 dient der Wendemechanismus dazu, den Stempel 62 so auszurichten, dass er in seiner oberen Endlage einen Streifen 60 des Haftbandes vom unteren Ende des Stapels im Magazin 58 übernimmt und in seiner unteren Endlage den übernommenen Streifen gegen das Flauschband auf der Unterlage 12 andrückt, um das durch den Tunnel 54 verlaufende Rohr zu fixieren.

Das Magazin 58 weist Durchbrüche 66 auf, die es erlauben, den Füllstand des Magazins zu kontrollieren. Die Streifen 60 werden nach unten gegen das untere Ende des Magazins 58 vorgespannt, beispielsweise mit Hilfe eines auf den obersten Streifen 60 des Stapels aufgelegten Gewichts 68.

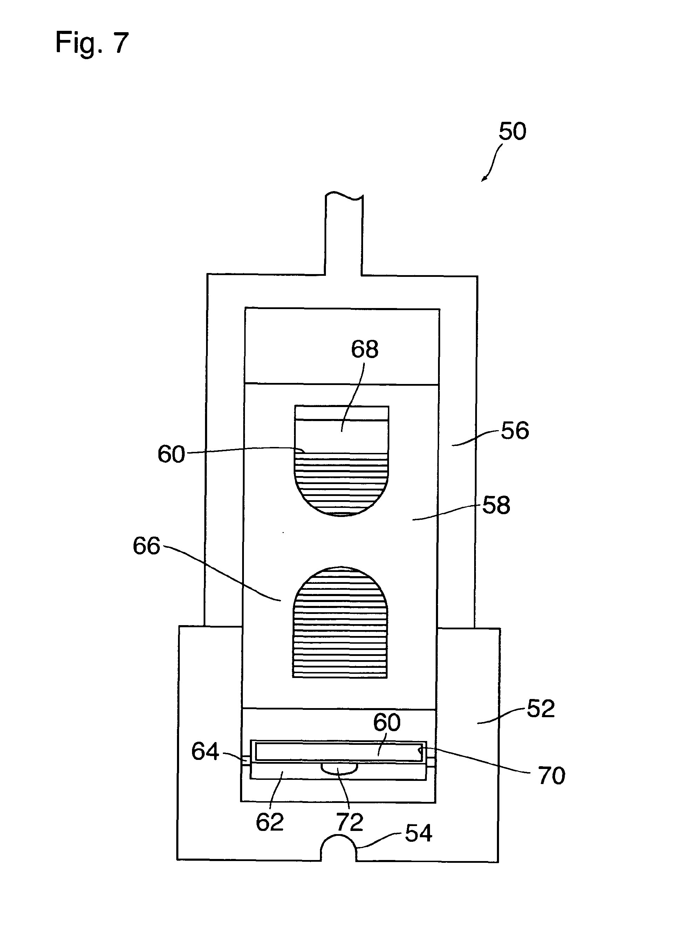

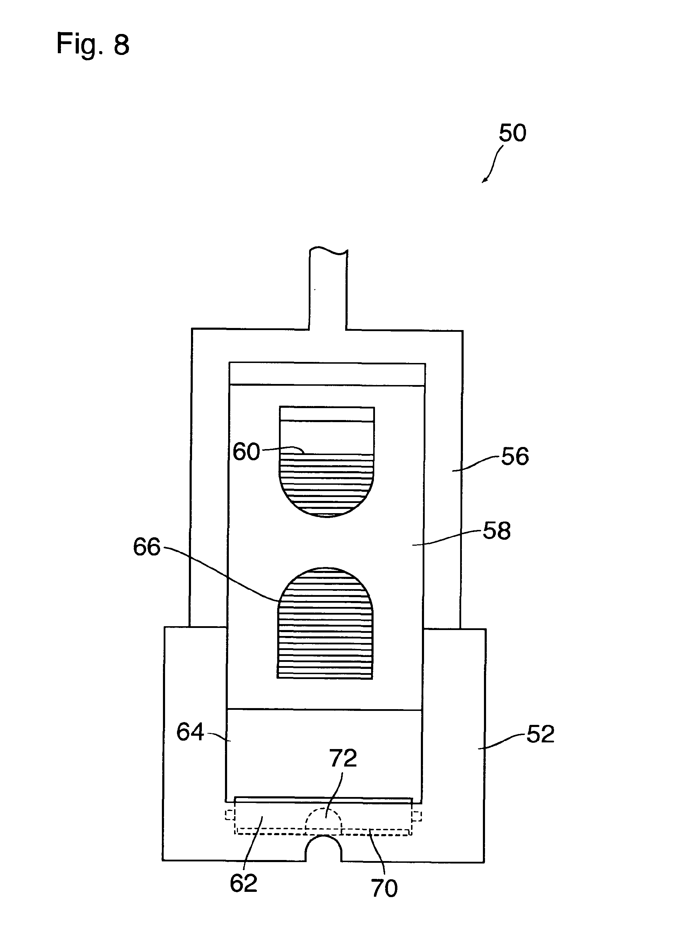

Der Bewegungsablauf des Setzgerätes 50 ist in Fig. 7 und 8 dargestellt. In Fig. 7 ist der Schlitten 56 etwas nach unten gedrückt worden, wodurch sich auch die Achse 64 des Stempels 62 nach unten bewegt hat. Die Bewegung des Stempels kann dabei durch ein nicht gezeigtes Getriebe (z. B. den bei der ersten Ausführungsform beschriebenen Schlagmechanismus) ins Schnelle übersetzt werden, so dass die Absenkgeschwindigkeit des Stempels zumindest phasenweise größer ist als die des Schlittens 56. Im Zuge der Absenkbewegung führt der Stempel 62 eine Drehbewegung um die Achse 64 aus, so dass man in Fig. 7 in eine Ausnehmung 70 des Stempels blickt, in der ein einzelner Streifen 60 (der vom unteren Ende des Stapels abgenommen wurde) reibschlüssig gehalten ist. Der Stempel weist außerdem eine dem Tunnel 54 entsprechende Ausnehmung 72 für das zu verlegende Rohr auf. Diese Ausnehmung 72 wird jedoch in Fig. 7 durch den Streifen 60 überbrückt.

In Fig. 8 ist der Stempel 62 weiter abgesenkt worden, so dass die Ausnehmung 70 nun nach unten weist und der Streifen auf das in dem Tunnel aufgenommene Rohr aufgesetzt wird. Bei der weiteren Absenkbewegung würde dann das Rohr in die Ausnehmung 72 des Stempels eintreten, während die Abschnitte des Streifens 60 beiderseits des Rohres sich um das Rohr schlingen und schließlich mit Hilfe des Stempels gegen das Flauschband angedrückt werden. Bei der anschließenden Aufwärtsbewegung des Schlittens 56 führt der Stempel 62 die umgekehrte Bewegungsabfolge aus, um einen neuen Streifen 60 aus dem Magazin zu entnehmen.

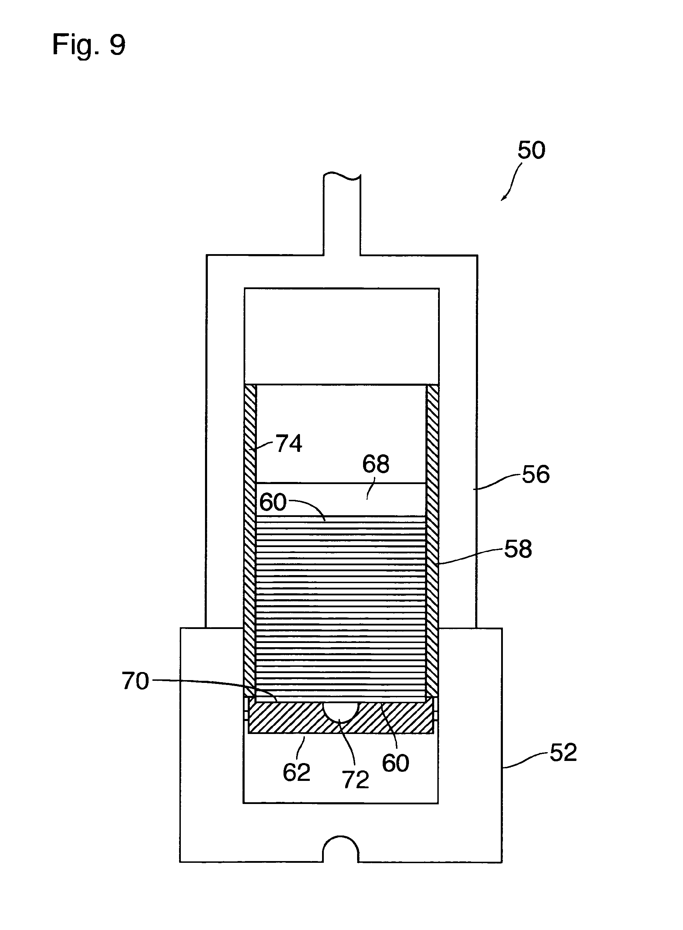

Fig. 9 zeigt einen Blick in das Innere des Magazins 58 sowie einen vertikalen Schnitt durch den Stempel 62, der sich hier in seiner oberen Endlage befindet. Die Ausnehmung 70 hat die Form eines flachen Bettes, dessen Tiefe knapp der Dicke eines einzelnen Streifens 60 entspricht. An den vertikalen Wänden des Magazins sind Führungen 74 gebildet, durch welche die Streifen 60 zentriert werden, wobei sie jedoch in vertikaler Richtung reibungsarm in dem Magazin beweglich bleiben. Der Stempel 62 stößt mit seiner die Ausnehmung 70 umgebenden umlaufenden Wand an den unteren Enden der Führungen 74 an, und durch die Last des Gewichts 68 wird der unterste Streifen 60 in die Ausnehmung 70 gedrückt, wobei sein Umfangsrand in der Umfangswand der Ausnehmung 70 etwas geklemmt wird.

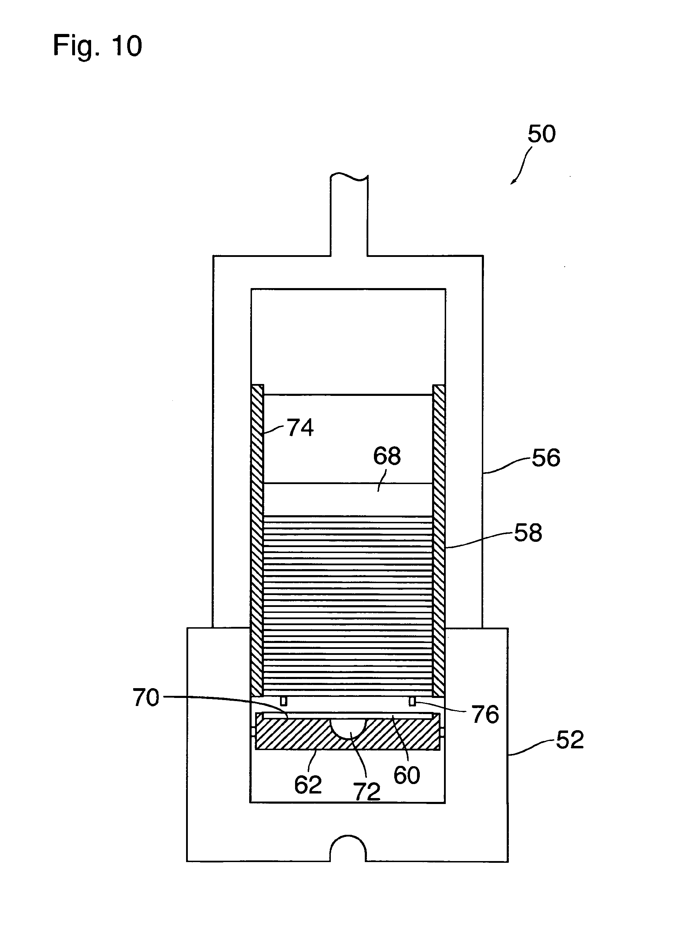

Fig. 10 zeigt den Zustand, in dem sich der Stempel 62 schon etwas abgesenkt und von den unteren Enden der Führungen 74 entfernt hat. In diesem Zustand verhindern eingeschwenkte Riegel 76, dass der Rest des Stapels nachrutscht. Die Riegel 76 werden über ein nicht gezeigtes Getriebe ebenfalls durch den Schlitten 76 angetrieben, so dass ihre Bewegung präzise mit der Bewegung des Stempels 62 koordiniert ist. Aufgrund der erwähnten Übersetzung, die die Abwärtsbewegung des Stempels 62 beschleunigt, bewegt sich der reibschlüssig in der Ausnehmung 70 gehaltene Streifen 60 schneller nach unten als die übrigen Streifen des Stapels, die lediglich der Schwerkraft unterliegen. Auf diese Weist entsteht zwischen dem untersten Streifen 60 und dem Rest des Stapels eine Lücke, in welche die Riegel 76 einfahren können. Bei der Aufwärtsbewegung des Stempels 62 werden die Riegel 76 rechtzeitig wieder zurückgezogen, so dass das Gewicht 68 den nächsten Streifen in die Ausnehmung 70 drücken kann.

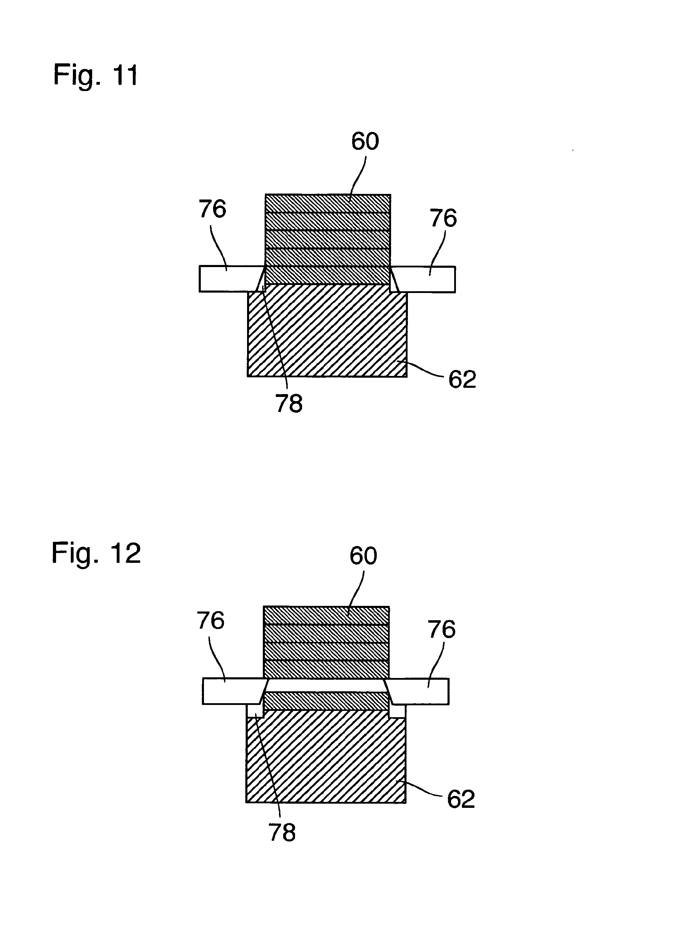

Fig. 11 zeigt einen Schnitt durch den Stempel 62 in dem Zustand des Setzgerätes, der auch in Fig. 9 gezeigt ist. Die Schnittebene verläuft hier vertikal, jedoch rechtwinklig zu der Schnittebene in Fig. 9 und 10. Es sind nur die untersten Streifen 60 des in dem Magazin aufgenommenen Stapels gezeigt. Der unterste Streifen liegt in der Ausnehmung des Stempels 62. Die Umfangswand der Ausnehmung ist an den Stellen, an denen sich die Riegel 76 befinden, durch Schlitze 78 unterbrochen, so dass die Riegel bis unmittelbar an den Stapel der Streifen 60 heranreichen können. Wenn sich nun der Stempel 62 mit dem in dessen Ausnehmung aufgenommenen Streifen 60 schlagartig nach unten bewegt, wie in Fig. 12 gezeigt ist, so fahren die Riegel 76 nach innen, so dass sie den nächsthöheren Streifen 60 abfangen, bevor dieser aufgrund seines Eigengewichts nachrutschen kann.

In einer modifizierten Ausführungsform sind die Riegel 76 elastisch in die in Fig. 12 gezeigte Eingriffstellung vorgespannt, und sie werden bei der Aufwärtsbewegung des Stempels von diesem nach außen gedrängt, so dass der nächste Streifen in die Ausnehmung 70 fallen kann. In noch einer anderen Ausführungsform sind anstelle der Riegel 78 Backen vorgesehen, die in die seitlichen Führungen 74 integriert sind und die einige Streifen 60 am unteren Endes des Stapels klemmend in Position halten, während sich der Stempel mit dem darin aufgenommenen Streifen abwärts bewegt. Wenn des Stempel wieder seine obere Endlage erreicht, werden die Backen vorübergehend gelöst, so dass der nächste Streifen in die Ausnehmung 70 eintreten kann.

## Patentansprüche

1. Vorrichtung zum Befestigen von Rohren (10) auf einer flächigen Unterlage (12) mit Hilfe eines Haftbandes (14), in der Form eines Setzgerätes (50) mit einem auf die Unterlage (12) aufsetzbaren Gehäuse (56), in dem ein Stempel (62), der eine Ausnehmung (72) für das Rohr (10) aufweist, verschiebbar geführt ist, **gekennzeichnet durch** ein Magazin (58) in der Form eines rechteckigen Kastens, der einen Stapel von vorgeschnittenen Streifen (60) des Haftbandes aufnimmt und aus dem die vorgeschnittenen Streifen (60) dem Stempel (62) zuführbar sind.

2. Vorrichtung nach Anspruch 1, bei der der Stempel (62) eine Ausnehmung (70) zur kraftschlüssigen Aufnahme eines einzelnen Streifens (60) aufweist und durch einen Wendemechanismus derart angetrieben ist, dass er in einer Endlage so orientiert ist, dass die Ausnehmung (70) dem Magazin (58) zugewandt ist und in der entgegengesetzten Endlage so orientiert ist, dass die Ausnehmung (70) der Unterlage (12) zugewandt ist.

3. Vorrichtung nach Anspruch 2, bei der die Streifen (60) in dem Magazin (58) einen Stapel bilden, der in Richtung auf den Stempel (62) vorgespannt ist, und bei der Riegel (76) derart mechanisch mit der Bewegung des Stempels (62) gekoppelt sind, dass sie den Rest des Stapels zurückhalten, wenn der Stempel (62) einen Streifen aus dem Magazin entnimmt.

4. Vorrichtung nach einem der Ansprüche 1 bis 3, bei der der Stempel (62) gegen Stempel mit einer anders dimensionierten Ausnehmung (72) austauschbar ist.

## Claims

1. A device for fixing tubes (10) on a flat support (12) by means of a fixing tape (14), the device having the form of a setting apparatus (50) comprising a housing (56) that is adapted to be placed onto the support (12) and in which a punch (62) that has a recess (72) for the tube (10) is slidably guided, **characterized by** a magazine (58) in the form of a rectangular box that accommodates a stack of pre-cut strips (60) of the fixing tape and from which the pre-cut strips (60) can be supplied to the punch (62).

2. The device according to claim 1, wherein the punch (62) has a recess (70) for force-fittingly accommodating a single strip (60) and is driven by a reversing mechanism such that, in one end position, it has an orientation in which the recess (70) faces the magazine (58) and, in the opposite end position, it is oriented such that the recess (70) faces the support (12).

3. The device according to claim 2, wherein the strips (60) form, within the magazine (58), a stack that is biased in the direction of the punch (62), and wherein locks (76) are mechanically coupled with the movement of the punch (62) that they retain the rest of the stack when the punch withdraws one strip from the magazine.

4. The device according to any of the claims 1 to 3, wherein the punch (62) is adapted to be replaced by a punch that has a recess (72) which different dimensions.

## Revendications

1. Dispositif destiné à fixer des tubes (10) sur un support plat (12) à l'aide d'une bande adhésive (14), ayant la forme d'un appareil de pose (50) comportant un boîtier (56) pouvant être placé sur le support (12), dans lequel un poinçon (62) comportant un évidement (72) pour le tube (10) est guidé de manière mobile, **caractérisé par** un magasin (58) ayant la forme d'une boîte rectangulaire qui reçoit une pile de bandes prédécoupées (60) de la bande adhésive et à partir duquel le poinçon (62) peut être alimenté en bandes prédécoupées (60).

2. Dispositif selon la revendication 1, dans lequel le poinçon (62) comporte un évidement (70) pour recevoir par adhérence une seule bande (60) et est entraîné par un mécanisme de retournement de telle sorte qu'il est orienté dans une position finale de sorte que l'évidement (70) est dirigé vers le magasin (58) et est orienté dans la position finale opposée de sorte que l'évidement (70) est dirigé vers le support (12).

3. Dispositif selon la revendication 2, dans lequel les bandes (60) dans le magasin (58) forment une pile qui est précontrainte en direction du poinçon (62), et dans lequel des verrous (76) sont mécaniquement couplés au mouvement du poinçon (62) de telle sorte qu'ils retiennent le reste de la pile lorsque le poinçon (62) prélève une bande à partir du magasin.

4. Dispositif selon l'une des revendications 1 à 3, dans lequel le poinçon (62) peut être remplacé par un poinçon avec un évidement (72) d'une autre dimension.
